Europäisches Patentamt

European Patent Office

Office européen des brevets

(19)

(11) **EP 0 550 830 B1**

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(51) Int Cl.$^6$: **G01T 1/208**

(21) Anmeldenummer: **92120826.0**

(22) Anmeldetag: **07.12.1992**

(54) **Schaltungsanordnung für die digitale Verarbeitung von Halbleiterdetektorsignalen**

Circuit for digital processing of semi-conductor detector signals

Montage pour le traitement des signaux d'un détecteur semi-conducteur

(84) Benannte Vertragsstaaten:
**DE FR GB IT**

(30) Priorität: **09.12.1991 DE 4140496**
**07.08.1992 DE 4226175**

(43) Veröffentlichungstag der Anmeldung:
**14.07.1993 Patentblatt 1993/28**

(73) Patentinhaber:
• **FORSCHUNGSZENTRUM JÜLICH GMBH**
**52425 Jülich (DE)**
• **Stein, Jürgen**
**D-42349 Wuppertal (DE)**
• **Forschungszentrum Rossendorf e.V.**
**D-01314 Dresden (DE)**

(72) Erfinder:
• **Stein, Jürgen**
**W-5600 Wuppertal 12 (DE)**
• **Georgiev, Andrey**
**W-1303 Sofia (BG)**
• **Büchner, Andree, Dr.**
**O-8046 Dresden (DE)**
• **Gast, Werner, Dr.**
**W-5000 Köln 41 (DE)**

(56) Entgegenhaltungen:
**DE-A- 3 403 528**          **US-A- 4 866 615**

**Beschreibung**

Die Erfindung bezieht sich auf eine Schaltungsanordnung, die zur Bestimmung der durch ein Einzelereignis in einem Halbleiter-Strahlungsdetektor erzeugten Gesamtladung mittels digitaler Verarbeitung der Signale aus dem dem Detektor nachgeschalteten, ladungsempfindlichen Vorverstärker mit RC-Rückkopplung vorgesehen ist.

Die Verarbeitung von Signalen aus Halbleiterdetektoren erfolgt in hochauflösenden spektroskopischen Analysatorsystemen, die im wesentlichen in Richtung auf eine möglichst exakte Bestimmung der Energie des Strahlungsquantes (Röntgenstrahlung, Gammastrahlung, geladene Teilchen ) und einen möglichst hohen Durchsatz hin optimiert sind. In der Gammaspektroskopie beispielsweise müssen aufgrund der hohen intrinsischen Auflösung (ca. 0.1%) der dort eingesetzten Germaniumdetektoren analoge Detektorsignale über einen dynamischen Bereich von etwa 70 dB mit einer integralen Nichtlinearität von besser als 0.02 % und einer differentiellen Nichtlinearität von besser als 0.3 % spektroskopiert werden. Der angestrebte Durchsatz beträgt dabei $10^4$- $10^5$ Ereignisse pro Sekunde.

Das Anwendungsgebiet von Halbleiterspektrometersystemen ist sehr breit und reicht von Meßsystemen für Umweltschutz, Medizin und Materialforschung bis hin zu experimentellen Großprojekten in kernphysikalischer und kosmologischer Grundlagenforschung.

Bei den konventionellen Verfahren der Verarbeitung von Halbleiterspektrometersignalen werden bislang weitgehend analoge Impulsverstärker ( Spektroskopieverstärker SV in Verbindung mit hochauflösenden Analog-zu-Digital Konvertern (ADC ) eingesetzt. Im Spektroskopieverstärker wird eine Pulsformung der Vorverstärkersignale durchgeführt mit dem Ziel, unter Optimierung des Durchsatzes und des Signal/Rausch Verhältnisses ein Ausgangssignal zu erzeugen, dessen Amplitude möglichst genau der im Halbleiterdetektor freigesetzten Ladung entspricht. Zusätzlich enthält der SV üblicherweise Schaltkreise zur Nullpunktstabilisierung ( base-line restauration) und zur Eliminierung von Pulsaufstockungen ( pile-up rejektion). Das Ausgangssignal des Spektroskopieverstärkers wird dem ADC zur Digitalisierung zugeführt. Der ADC enthält neben einem Spitzenwert-Detektor/ Dehner und einem linearen Tor, um die Signalamplitude für die Konversionszeit zu fixieren, einen Amplituden-Zeit Konverter und schließlich einen Zeit-zu-Digital Konverter ( Wilkinson ADC ).

Diese konventionelle Art der Signalverarbeitung zeigt mehrere Schwachpunkte: Verschlechterung der effektiven Auflösung des Halbleiterspektrometers durch "ballistic deficit" und "charge trapping" Effekte, Begrenzung des maximalen Durchsatzes aufgrund von Pulsaufstockungen und langen Konversionszeiten des ADC's, und schließlich hohe Empfindlichkeit hinsichtlich Temperaturschwankungen und mangelnde Langzeitstabilität wegen der Vielzahl von analogen Komponenten, die in jedem Signalverarbeitungskanal zum Einsatz kommen.

Der "ballistic deficit" Effekt ist auf Unterschiede in der Ladungsverteilung des Detektorsignals über das Ladungssammlungsintervall zurückzuführen und äußert sich in unterschiedlichen Formen und Anstiegszeiten der Anstiegsflanke des Vorverstärker-Ausgangssignals. Die geräteseitig fest eingestellte Übertragungsfunktion des Pulsformungsnetzwerkes im nachgeschalteten SV kann diesen Unterschieden nur unvollkommen Rechnung tragen und verwandelt sie in Schwankungen der Pulsamplitude in Richtung kleinerer Werte. Diese Reduktion der Pulsamplitude wird als "ballistic deficit" bezeichnet. In jüngerer Vergangenheit wurden verschiedene, auf analogen Schaltkreisen basierende Methoden entwickelt, um auf solche, sowie auf "charge carrier trapping" Effekte zurückzuführende Defizite in den Pulsamplituden hin zu korrigieren (F. S. Goulding and D. A. Landis, IEEE 35 (1988)119; M. L. Simpson et al., IEEE 36 (1989)260; S. M. Hinshaw and D. A. Landis, IEEE 37 (1990) 374 ), von denen die verbreiteteste die Goulding-Landis Methode ist. Letztere ermittelt den Korrekturfaktor anhand der unterschiedlichen zeitlichen Verschiebung der Pulsmaxima nach der Pulsformung. Sie führt zu einer gewissen Verbesserung der Energieauflösung, zeigt jedoch immer noch eine deutliche Energieabhängigkeit der Ergebnisse und ist nicht in der Lage, "minority charge carrier trapping" Effekten Rechnung zu tragen.

Um den Durchsatz von spektroskopischen Analysatorsystemen zu optimieren wurden Anstrengungen in beide Richtungen unternommen, nämlich einerseits die Totzeit des analogen Spektroskopieverstärkers und andererseits die Konversionszeit des Analog-zu-Digital Konverters zu minimieren.

Zur Reduktion der Totzeit der analogen Signalaufbereitung wurde der geschaltete Integrator (Gated Integrator GI) eingeführt. Beim GI folgt einem Pulsformungsnetzwerk mit vergleichsweise kleinen Zeitkonstanten ein geschalteter Integrator. Man erreicht mit diesem Verfahren ein verbessertes Verhalten des SV bei hohen Zählraten, allerdings auf Kosten einer generell etwas verschlechterten Energieauflösung.

Eine Verringerung der Konversionszeit des ADC's erreicht man, indem man das Wikinson Verfahren ( D. Wikinson, Proc. Cambr. Soc. 46 (1950) 508) durch das binäre Wägeverfahren (successive approximation ) ersetzt (P. Casoli and P. Maranosi, Nucl. Instr. Meth. 166 (1979) 299). Da diesem Verfahren jedoch eine beträchtliche differentielle Nichtlinearität inhärent ist, muß es durch das Verfahren der gleitenden Kanallagen (sliding scale) ergänzt werden (E. Gatti, Nucl. Instr. Meth. 24 (1963) 241). Das kombinierte Verfahren weist zwar signifikant verkürzte Konversionszeiten auf, ist aber dennoch weiterhin mit einigen Unzulänglichkeiten behaftet. Zum einen ist man wie beim Wilkinson-Verfahren auch hier auf analoge Schaltkreise wie Spitzenwert- Detektor/Dehner und lineares Tor angewiesen, um die Pulsamplitude für den Zeitraum der Konversion zu fixieren, und wird somit weiterhin mit den solchen Schaltkreisen eigenen Schwächen, wie Empfindlichkeit gegenüber Zählraten- und Temperaturschwankungen etc., konfrontiert. Zum anderen können die Vorteile des Verfahrens der gleitenden Kanallagen, das im Prinzip einen Mittelungsprozeß darstellt, nur dann voll zum Tragen kommen, wenn Meßwerte in hinreichender Statistik vorliegen, d. h. es versagt bei Einzelmessungen aufgrund des ungünstigen Kanalprofils.

Allgemein weisen praktisch alle der heute eingesetzten und oben andiskutierten Verfahren der Verarbeitung von Halbleiterdetektorsignalen beträchtliche Temperatur- und Langzeitinstabilitäten auf, mit, ihren negativen Auswirkungen auf entscheidende Systemparameter wie Auflösung und integrale Linearität. Dies ist vor allem der Vielzahl von analogen elektronischen Bauelementen, wie sie in den konventionellen spektroskopischen Analysatorsystemen Verwendung finden, und ihrer Empfindlichkeit gegenüber äußeren Einflüssen, zuzuschreiben.

In jüngster Vergangenheit wurden ansatzweise bereits Anstrengungen unternommen, das Problem der Stabilität von Spektrometersystemen in den Griff zu bekommen, indem man den geschalteten Integrator und den ADC durch einen schnellen Digitalisierer (Flash ADC) ersetzte. Bei diesen Methoden wird der Signalverlauf nach der analogen Pulsformung digitalisiert. Sie können daher den mit den "ballistic/charge carrier trapping" Defiziten verbundenen Problemen auch nur unvollkommen Rechnung tragen, da diese Probleme auf die analoge Pulsformung zurückzuführen sind. Darüberhinaus implizieren sie ein neues, spezielles "bal listic deficit" Problem, dessen Ursache in der zeitlich unkorrelierten Lage der Pulsmaxima relativ zum Abtastraster begründet liegt. Deshalb finden diese Methoden z. Zt. nur in solchen Fällen Verwendung, in denen keine maximale Energieauflösung befordert wird.

In Anbetracht dieser Ausgangsposition ist es daher Aufgabe der Erfindung, eine Schaltungsanordnung für die digitale Verarbeitung von Signalen aus Halbleiterdetektoren mit ladungsempfindlichem Vorverstärker zu schaffen, die folgende Eigenschaften aufweist:

a) eine verbesserte Unterdrückung von "ballistic deficit" und "charge carrier trapping" Effekten,

b) ein gutes Zählratenverhalten insbesondere bzgl. der maximal erreichbaren Energieauflösung,

c) eine optimale Temperatur- und Langzeitstabilität.

Diese Aufgabe wird durch die Schaltungsanordnung mit den Merkmalen des Anspruchs 1 gelöst.

Die Schaltungsanordnung gemäß der Erfindung weist eine hervorragende Unterdrückung von "ballistic deficit" und "charge carrier trapping" Effekten auf und zeichnet sich durch ein hohes Auflösung/Totzeit Verhältnis und eine gute Temperatur- und Langzeitstabilität aus. Mit der Schaltungsanordnung wird das Konzept verfolgt, die ursprüngliche, unverzerrte Ladungsverteilung der Detektorsignale zu rekonstruieren, um damit eine ideale ballistische Messung zu ermöglichen, deren Ergebnis unabhängig vom jeweils aktuellen Verlauf der Ladungsverteilung ist.

In einem Halbleiterdetektor setzt jedes Strahlungsereignis eine der absorbierten Energie entsprechende Ladungsmenge frei. Sie wird im angeschlossenen, ladungsempfindlichen Vorverstärker gesammelt und erzeugt ein Signal mit stufenförmigen Anstieg an dessen Ausgang. Die Entladung erfolgt i.a., und speziell in den hier betrachteten Systemen mit hohem Durchsatz bei gleichzeitig gu ter Energieauflösung, über einen hochohmigen Widerstand, so daß dem stufenförmigen Anstieg des Signals ein exponentieller Abfall folgt, dessen Zeitkonstante im Vergleich zur Anstiegszeit sehr lang ist. Mathematisch kann das Vorverstärtierausgangssignal $U_P(t)$ als Faltung zwischen der Ladungsverteilungsfunktion g(t) und der Vorverstärkerübertragungsfunktion f(t) betrachtet werden:

$$U_P(t) = \int_{-\infty}^{+\infty} g(t)\ f(t-\tau)\ d\tau \qquad (1)$$

Für den Fall, daß die Ladungssammlung augenblicklich erfolgt, kann g(t) durch eine δ-Funktion beschrieben werden, und Gl. (1) wird zu:

$$U_P(t) = G\ f(t) \qquad (2)$$

wobei G die zur absorbierten Energie proportionale Gesamtladung ist.

Bei der konventionellen, analogen Pulsformung geht man davon aus, daß diese Bedingung erfüllt ist, bzw. daß die Ladungssammlungszeit zumindest sehr kurz im Vergleich zu den Zeitkonstanten der Pulsformung ist. Für großvolumige, koaxiale Germaniumdetektoren, die bei hohen Zählraten, d.h. relativ kurzen Zeitkonstanten der Pulsformung betrieben werden, ist dies jedoch nicht der Fall. Die für endliche Ladungssammlungszeiten nicht mehr adäquate Pulsformung führt zu einer Reduktion der Pulsamplitude, dem bereits erwähnten "ballistic deficit" Effekt.

Die Schaltungsanordnung gemäß der Erfindung vermeidet das Problem, indem sie als ersten Schritt der Signalverarbeitung die durch Gl. (1) beschriebene Faltung von Ladungsverteilung und Vorverstärkerübertragungsfunktion im Vorverstärkerausgangssignals rückgängig macht, d.h. durch Entfaltung die ursprüngliche Ladungsverteilung des Detektorsignals rekonstruiert, so daß eine ideale ballistische Messung der Gesamtladung des Strahlungsereignisses erfolgen kann.

Eine solche Entfaltung mit Mitteln analoger Signalverarbeitung durchzuführen ist praktisch unmöglich. Deshalb wird das Halbleiterdetektorsignal direkt nach dem ladungsempfindlichen Vorverstärker von einem schnellen ADC abgetastet und digitalisiert. Die gesamte weitere Verarbeitung erfolgt dann in einer digitalen Umgebung. Für die diskreten Werte des digitalisierten Vorverstärkerausgangssignals wird das Faltungsintegral aus Gl. (1) ) zu einer Summe:

$$U_P(i\ t_S) = \sum_{j=0}^{\infty} g(j\ t_S) f(i\ t_S - j t_S) \qquad (3)$$

wobei $t_S$ ein Abtastintervall bezeichnet, d.h. den zeitlichen Abstand zwischen zwei benachbarten Abtastpunkten des Signals $U_P(t)$. Für eine auf $t_S$ normierte Zeitachse wird Gl. (3) zu

$$U_P(i)\ \Big|_{i=0}^{\infty} = \sum_{j=0}^{\infty} g(j)\ f(i-j) \qquad (4)$$

Die Entfaltung der diskreten Ladungsverteilungsfunktion g(j), d.h. die Auflösung dieses Gleichungssystems in seiner allgemeinen Form nach g(i), ist ohne beträchtlichen Rechenaufwand nicht zu bewerkstelligen. Einige Gegebenheiten vereinfachen den Rechenprozeß jedoch so sehr, daß eine Verarbeitung in Echtzeit möglich wird. Erstens kann man die Entfaltungsprozedur auf ein Fenster der Breite M, d.h. auf M im Abstand $t_S$ eines Abtastintervalls aufeinanderfolgende Abtastwerte beschränken, so daß sich die Anzahl der Gleichungen in (4) auf M reduziert. Dies beeinträchtigt das zu berechnende Ergebnis für die Gesamtladung nicht, solange das Zeitintervall $Mt_S$ größer als die maximal zu erwartende Ladungssammlungszeit ist. Zweitens ist zur Bestimmung der Energie des Strahlungsereignisses die Ermittlung der Gesamtladung ausreichend. Eine detaillierte Kenntnis des aktuellen, zeitlichen Verlaufs der Ladungssammlung, d.h. der Form der Ladungsverteilungsfunktion g(j), ist nicht erforderlich. Und drittens ist die Vorverstärkerübertragungsfunktion f(i) i.a. sehr gut bekannt und mathematisch leicht zu beschreiben. Im Fall von Vorverstärkern, in denen die Entladung über einen Widerstand erfolgt, ist es eine einfache Exponentialfunktion.

Diese drei Gegebenheiten ermöglichen die Lösung des Gleichungssystems (4) mittels einer einfachen Rekursionsformel:

$$G_i = g(i)\ \Big|_{i=0}^{i} = U(i) + (1-k) \sum_{j=0}^{i-1} U(j) \qquad (5)$$

wobei $k = \exp\text{-}(t_S/\tau_{RC})$ die Abfallskonstante der Vorverstärkerübertragungsfunktion für ein Abtastintervall ist. Zum Zeitpunkt i=M wird die gesammelte Ladung $G_i$ zu $G_M$ und damit gleich der im Zeitintervall von 0 bis M $t_s$ akkumulierten Gesamtladung. Die Rekursionsformel (5) besitzt zwei wichtige Eigenschaften: (i) Das Endergebnis $G_M$ ergibt sich nach M aufeinanderfolgenden Schritten, wobei bei jedem Schritt lediglich eine Multiplikation-Summation und eine Addition durchgeführt werden muß. Jeder Schritt entspricht einem neuen Abtastwert aus dem Eingangsdigitalisierer, d.h. die Rekursion kann in Echtzeit durchgeführt werden. (ii) Die Rekursion kann leicht über den durch M vorgegebenen Bereich hinaus erweitert werden:

$$G_{L+M} = G(i)\ \Big|_{i=L}^{L+M} = U(i) - U(i-M) + (1-k) \sum_{j=i-M}^{i-1} U(j) \qquad (6)$$

d.h., durch Hinzufügen nur einer einzigen weiteren Operation (Subtraktion) pro Schritt kann die Entfaltung in einem neuen Fenster durchgeführt werden. Aus der Tatsache, daß der Parameter L in Gl. (6) jede beliebige Zahl sein kann, folgt, daß der Entfaltungsprozeß kontinuierlich, oder mit anderen Worten "gleitend" erfolgen kann. Das Verfahren wird daher als gleitende Entfaltung (moving window deconvolution) bezeichnet.

In der Schaltungsanordnung gemäß der Erfindung wird dieses Verfahren auf alle Abtastwerte des Eingangsdigitalisierers angewandt, d.h. mit jedem neuen Abtastwert wird eine neue Messung der im aktuellen Entfaltungsfenster befindliclen Ladungsmenge durchgeführt. Das Endresultat, nämlich die Gesamtmenge der im Halbleiterdetektor durch ein einzelnes Strahlungsquant freigesetzten Ladung, erhält man, indem man die Differenz bildet zwischen dem Meßwert, der sich aus Messungen der auf das betrachtete Strahlungsereignis zurückzuführenden Gesamtladungsmenge ergibt, und dem, der aus Messungen des momentanen Beitrages des Stufen-Rauschens (step noise) resultiert. Der Meßwert für die Gesamtladung wird dabei anhand der L Ergebnisse der Entfaltung in L aufeinanderfolgenden Zeitfenstern bestimmt, die jeweils die zeitliche Verteilung der dem Strahlungsereignis zuzuschreibenden Gesamtladung vollständig überdecken. Der Beitrag des Stufen-Rauschens ergibt sich anhand der N Ergebnisse der Entfaltung in den N aktuellsten, keinen Beitrag irgendeines Strahlungsquantes beinlaltenden Zeitfenstern.

Um die kontinuierliche Entfaltung in jeweils um ein Abtastintervall gegeneinander verschobenen Zeitfenstern einer Breite von M Abtastintervallen durchzuführen, und damit eine Serie von im Abstand eines Abtastintervalls aufeinanderfolgenden Entfaltungsergebnissen zu erzeugen, wird ein Modul zur gleitenden Entfaltung (moving window deconvolver MWD) eingesetzt, welches mit dem Ausgang des ADC's verbunden ist. Dieses Modul stellt eine direkte Realisierung des oben beschriebenen Verfahrens dar.

Zur Bestimmung des die Gesamtladung des Strahlungsereignisses repräsentierenden Wertes wird ein Modul benutzt, dessen Eingang mit dem Ausgang des MWD Moduls verbunden ist. Dieses Modul verarbeitet dabei jeweils L aufeinanderfolgende Werte, von denen jeder einzelne die vom Strahlungsquant erzeugte Gesamtladung vollständig wiedergibt. Die entsprechenden Werte werden dem Datenstrom von Resultaten aus der gleitenden Entfaltung entnommen, den das MWD Modul generiert.

Den momentanen Beitrag des Stufenrauschens liefert ein Modul, welches ebenfalls dem MWD Modul nachgeschaltet ist. Dieses Modul verarbeitet die N aktuellsten, keinen Beitrag irgendeines Strahlungsquantes enthaltenden Ergebnisse der gleitenden Entfaltung, die das MWD Modul vor bzw. nach dem jeweils betrachteten Strahlungsereignis verlassen.

Das endgültige Ergebnis, das die von einem Einzelereignis erzeugte Gesamtladung repräsentiert, erhält man mittels eines mit den vorgenannten in geeigneter Weise in Verbindung stehenden Moduls, welches den momentanen Beitrag des Stufen-Rauschens von dem die Gesamtladung des jeweiligen Strahlungsquantes widergebenden Meßwert subtrahiert.

In der obigen Beschreibung bezeichnet M die Breite des zeitlichen Fensters in Einheiten eines Abtastintervalls, in dem die Entfaltung durchgeführt wird. Sie ist um L Abtastintervalle größer als der maximale Zeitraum, in dem eine Deposition von einzelnen Strahlungsquanten zuzuschreibender Ladung stattfinden kann. Die Zahl N ist gleich oder größer L.

Um das Modul zur gleitenden Entfaltung ( MWD ) gemäß Anspruch 1 der Erfindung zu realisieren, werden zweckmäßigerweise die in Anspruch 2 genannten gebräuchlichen Elektronikbauelemente bzw. entsprechenden Prozeßelemente eines Signalprozessors (digital signal processor DSP) eingesetzt. Im einzelnen sind dies eine M-stufige digitale Verzögerungseinheit, ein Subtrahierer, eine einstufige Verzögerungseinheit, Summierer und ein Multiplizierer mit einem konstanten Multiplikator K. Die Verzögerung M definiert die Breite des Fensters, in dem die Entfaltung durchgeführt wird. Sie muß größer als die maximale Ladungssammlungszeit des angeschlossenen Halbleiterdetektors sein. Die Konstante K ergibt sich aus der Abfallszeitkonstanten des Vorverstärkers und der Länge des Abtastintervalls.

Der Eingang des MWD Moduls ist sowohl direkt mit dem positiven, als auch indirekt über die M-stufige Verzögerungseinheit mit dem negativen Eingang des Subtrahierers verbunden. Der Ausgang des Subtrahierers wird über eine einstufige Verzögerungseinheit dem ersten Eingang des Summierers zugeführt. Dessen Ausgang wiederum wird über eine weitere einstufige Verzögerungseinheit auf seinen zweiten Eingang rückgekoppelt und über den Multiplizierer dem ersten Eingang des Ausgangssummierers zugeführt. Der zweite Eingang ist mit dem Ausgang des Subtrahierers verbunden.

Als Schaltungsanordnung zur Bestimmung des die Gesamtladung des Strahlungsquantes repräsentierenden Wertes gemäß Anspruch 1 wird ein Modul zur Mittelwertbildung (AU ) mit den Merkmalen des Anspruchs 3 verwendet.

Um das Modul zur Mittelwertbildung (AU) gemäß Anspruch 3 der Erfindung zu realisieren, werden zweckmäßigerweise die in Anspruch 4 genannten gebräuchlichen Elektronikbauelemente bzw. entsprechenden DSP Prozeßelemente eingesetzt. Im einzelnen sind dies ein Akkumulator, ein Register und ein Multiplizierer mit dem konstanten Multiplikator 1/L. Die Konstante L entspricht dabei der Anzahl der Werte, über die der Mittelwert gebildet wird.

Den Eingang des AU Moduls stellt der Eingang des Akkumulators dar. Der Ausgang des Akkumulators ist über den Multiplizierer mit dem Eingang des Ausgangsregisters verbunden. Der Takteingang des Akkumulators ist gleichzeitig der Takteingang des AU moduls. Der Rücksetzeingang des Akkumulators und der Takteingang des Ausgangsregisters sind mit dem Zeitschalt-Kontrolleingang des AU Moduls verbunden.

Als Schaltungsanordnung zur Ermittlung des Beitrages des momentanen Stufen-Rauschens gemäß Anspruch 1 wird ein Modul zur gleitenden Mittelwertbildung (MAU ) mit den Merkmalen des Anspruchs 5 verwendet.

Um das Modul zur gleitenden Mittelwertbildung (MAU) gemäß Anspruch 5 der Enfindung zu realisieren, werden zweckmäßigerweise die in Anspruch 6 genannten gebräuchlichen Elektronikbauelemente bzw. entsprechenden DSP Prozeßelemente eingesetzt. Im einzelnen sind dies ein Akkumulator, ein N Speicherplätze tiefer FIFO Speicher ( First-In-First-Out), ein Subtrahierer und ein Multiplizierer mit dem konstanten Multiplikator 1/N. Die Konstante N entspricht der der Anzahl der Werte, über die der Mittelwert gebildet wird.

Der Eingang des MAU Moduls ist sowohl direkt mit dem positiven Eingang als auch indirekt über den FIFO Speicher mit dem negativen Eingang des Subtrahierers verbunden. Der Ausgang des Subtrahierers wird über den Multiplizierer dem Eingang des Akkumulators zugeführt. Der Takteingang des Akkumulators und der Takteingang des FIFO Speichers sind mit dem Takteingang des MAU Moduls verbunden.

Als Schaltungselement zur Berechnung des Endergebnisses gemäß Anspruch 1 wird zweckmäßigeweise der in den Anspruch 7 genannte Subtrahierer verwendet. Die Eingänge des Subtrahierers sind mit den Ausgängen des AU bzw. MAU Moduls verbunden. Er subtrahiert den momentanen, mittleren Beitrag des Stufenrauschens, den das MAU Modul berechnet, von dem die Gesamtladung des jeweiligen Strahlungsquantes beinhaltenden Mittelwert, welchen das AU Modul liefert. Dem Subtrahierer ist ein Register nachgeschaltet, das das Ergebnis für die weitere Datenerfassung zwischenspeichert.

Als Schaltungselement zur Vermeidung von Aliasing-Effecten gemäß Anspruch 1 wird zweckmäßigeweise der in Anspruch 8 genannte Tiefpaß-Filter verwendet. Er vermeidet Aliasing-Effekte aufgrund hochfrequenter Anteile des Delta-Rauschens, und ist bei Bedarf zwischen Vorverstärker und ADC zu schalten.

Die Abbildungen zeigen eine der möglichen Realisierungen der Schaltungsanordnung und die entsprechenden Schaltkreise. Im einzelnen sind dies:

Abb. 1) Blockschaltbild der gesamte Schaltungsanordnung.
Abb. 2) Blockschaltbild des Moduls zur gleitenden Entfaltung MWD.

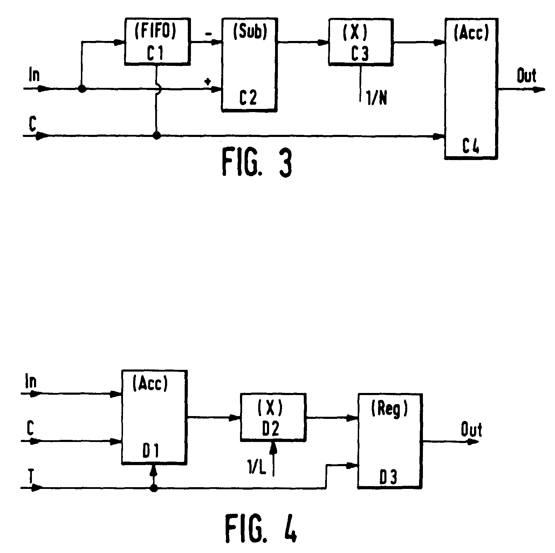

Abb. 3) Blockschaltbild des Moduls zur gleitenden Mittelwertbildung MAU.
Abb. 4) Blockschaltbild des Moduls zur Mittelwertbildung AU.

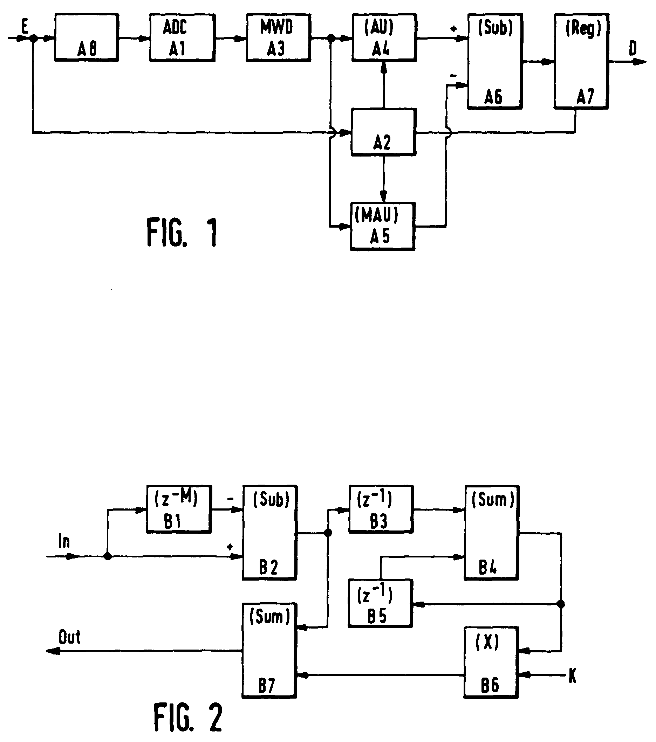

Wie aus Abb. 1 ersichtlich, wird das Detektorsignal E von einem schnellen ADC abgetastet und digitalisiert. Der resultierende Datenstrom, der sich aus den im Abstand von einem Abtastintervall 1 aufeinanderfolgenden Abtastwerten zusammensetzt, wird dem Modul zur gleitenden Entfaltung (A3) zugeführt. Das MWD Modul führt kontinuierlich eine Entfaltung der in diesem Datenstrom mit der Vorverstärkerübertragungsfunktion gefaltet vorliegenden Ladungsverteilung des Detektorsignals E bzgl. der M jeweils aktuellsten Eingangswerte durch, so daß man für jeder neuen Eingangswert ein neues Resultat erhält. Das heißt, es transformiert den Eingangsdatenstrom in einen neuen Datenstrom, der sich aus den im selben Abstand von einem Abtastintervall aufeinanderfolgenden Ergebnissen der Entfaltung zusammensetzt.

Sobald das Fenster, in dem die gleitende Entfaltung der im Eingangssignal mit der Vorverstärkerübertragungsfunktion gefalteten Ladungsverteilung des Detektorsignals durchgeführt wird, die gesamte, von einem einzelnen Strahlungsquant erzeugte Ladungsverteilung überdeckt, gibt das Ergebnis der Entfaltung immer die diesem Ereignis zuzuschreibende Gesamtladung wieder. Und da die Entfaltung jeweils über den gesamten Bereich des Fensters erfolgt, ist das Ergebnis auch unabhängig von der gerade aktuellen Ladungsverteilung innerhalb des Fensters, d.h. es wird eine ideale ballistische Messung durchgeführt.

Die Breite M des Fensters wird so gewählt, daß sie L Abtastintervalle länger ist als die maximale, zeitliche Verteilung der Gesamtladung des Strahlungsquantes. Infolgedessen geben L aufeinanderfolgende Resultate der Entfaltungsprozedur die Gesamtladung des Ereignisses wieder. Sie sind also eng mit der Ladung des Ereignisses korreliert, aber weitgehend unkorreliert im Hinblick auf das statistische Rauschen, d.h. das serielle oder Delta-Rauschen. Die Mittelung über diese L aufeinanderfolgenden Resultate ergibt daher einen Wert für die Gesamtladung, dessen Signal/Rausch Verhältnis mit der Anzahl L der eingehenden Einzelresultate ansteigt. Es ist Aufgabe des Moduls zur Mittelwertbildung (AU)-(A4), diese Mittelung über die L Resultate der Entfaltung durchzuführen und einen Wert zu liefern, der die Gesamtladung des Strahlungsquantes repräsentiert.

Wenn das Fenster einen Zeitbereich überdeckt, der keine von einem Strahlungsereignis herrührende Ladung enthält, so gibt das Ergebnis der Entfaltung die in diesem Zeitfenster enthaltene Rauschladung wieder. Diese Rauschladung ist auf den Detektorsperrstrom, den Vorverstärker Eingangsstrom etc. zurückzuführen, und wird als paralleles oder Stufen-Rauschen bezeichnet. Alle Entfaltungsresultate über Bereiche, die keine irgendeinem Strahlungsereignis zuzuschreibende Ladung enthalten, repräsentieren diesen Rauschbeitrag. Durch Mittelung über N solcher Resultate ist es daher möglich, statistische Fluktuationen im Beitrag des Stufen-Rauschens um den Faktor $\sqrt{N}$ zu reduzieren. Die N Entfaltungsresultate müssen dabei nicht unbedingt zeitlich unmittelbar aufeinanderfolgenden Messungen entstammen.

Um den relativ langsamen, beispielsweise durch Änderung der Detektortemperatur hervorgerufenen Fluktuationen im Beitrag des Stufen-Rauschens Rechnung zu tragen, wird das Verfahren der gleitenden Mittelwertbildung angewandt. Das heißt, daß jeweils nur die N aktuellsten Resultate der Entfaltung zur Mittelwertbildung herangezogen werden, und daß jeder neue Wert einen neuen, aktualisierten Beitrag des Stufen-Rauschen liefert.

Dementsprechend ist es Aufgabe des Moduls zur gleitenden Mittelwertbildung (MAU)-(A5), alle Entfaltungsergebnisse, die keine Ladung von Strahlungsereignissen enthalten, zu übernehmen und bei jedem Eintrag eines neuen Wertes die Mittelung über die N aktuellsten Werte durchzuführen.

Der Subtrahierer (A6) berechnet das endgültige Ergebnis, indem er den momentanen, mittleren Beitrag des Stufen-Rauschens, wie ihn das MAU Modul bestimmt, von dem Mittelwert subtrahiert, den das AU Modul ausgibt, und der die Gesamtladung des betrachteten Strahlungsquantes widergibt. Im Register (A7) wird das Ergebnis für die weitere Datenerfassung zwischengespeichert.

Bei Bedarf ist zwischen Vorverstärker und ADC ein Tiefpass (A8) als Anti-Aliasing Filter gegen hochfrequente Komponenten des Delta-Rauschens zu schalten. Damit kann die Erfüllung des Abtast-Theorems sichergestellt werden, und etwaige, auf die diskrete Abtastung zurückzuführende Diskontinuitäten in den Residuum-Funktionen des Delta- und Stufen-Rauschens können vermieden werden.

Die Kontrolleinheit (CU) - (A2) detektiert den Anfang eines neuen Strahlungsereignisses und generiert alle notwendigen Kontroll- und Steuersignale für das MAU bzw. AU Modul und für das Ausgangsregister. Sobald die Kontrolleinheit den Beginn eines neuen Ereignisses registriert, shließt sie das MAU Modul. Nach einem festgelegten Zeitintervall, welches länger als die maximale Ladungssammlungszeit ist, öffnet sie das AU modul für einen Zeitraum von L Abtastintervallen. Unmittelbar nach diesen L Intervallen erfolgt die Subtraktion und das Endergebnis steht damit fest. Die Kontrolleinheit speichert es im Ausgangsregister und öffnet das MAU Modul und mit dem Prozeß fortzufahren. Falls in der Zwischenzeit ein weiteres Ereignis registriert wird, blockiert die Kontrolleinheit das AU Modul, setzt es zurück und verlängert die Schließung des MAU Moduls um weitere M Abtastintervalle. Der minimale Abstand zwischen zwei Ereignissen, die korrekt verarbeitet werden sollen, beträgt somit M Abtastintervalle. Ist der Abstand kürzer, so wird das erste Ereignis gelöscht und das zweite blockiert, d.h. keines von beiden führt zu einem Endergebnis. In allen Fällen liefert die Kontrolleinheit die erforderlichen Steuersignale.

Die Schaltungsanordnung gemäß Abb. 1 weist eine hervorragende Unterdrückung von "ballistic deficit" und "charge carrier trapping" Effekten auf. Dies soll anhand eines Vergleiches mit einem Spektroskopieverstärker (SV) mit Quasi-Gauß'scher Pulsformung, wie er typischerweise in modernen Halbleiterspektrometersystemen eingesetzt wird, gezeigt werden. Dieser Vergleich bietet sich insofern an, als die Quasi-Gauß'sche Pulsformung ein etwas besseres "ballistic deficit" Verhalten zeigt als die meisten anderen der heute gebräuchlichen Pulsformungsnetzwertie, wie z.B. die "Quasi-Dreieck", oder die "Sinus-N" Pulsformung. Ein einfacher Ausdruck zur Berechnung der Auflösungsverschlechterung aufgrund von "ballistic deficit" Effekten ( B. Loo, F. Gouding, IEEE Trans.Nuc.Sci., 35 (19-1988) 1 ) lautet:

$$FWHM_{BD} = \frac{n \cdot E_0}{24} \left(\frac{T_{min}}{t_0}\right)^2 = \frac{n \cdot E_0}{4 \cdot 24} \left(\frac{T_{max}}{t_0}\right)^2 \qquad (7)$$

Dabei ist $E_0$ die Energie des Strahlungsquantes, während n die Ordnung des Quasi-Gauß'schen Pulsformers, $T_{min}$ bzw. $T_{max}$ die minimale bzw. maximale Ladungssammlungzeit und $t_0$ die Spitzenwertzeit (peaking time) der Sprungantwort des Pulsformers bezeichnen.

Setzt man in Gl. (7) nun $E_0$= 1.33 MeV ($^{60}$Co Eichlinie), $T_{max}$=800 ns ( typischer Wert für großvolumige, coaxiale Ge-Detektoren), n=2.83 (optimaler Parametersatz für das beste "ballistic deficit" Verhalten des aktiven Pulsformungsnetzwerkes im ORTEC 472 Spektroskopieverstärker) und $t_0$=4.45 μs (entsprechend einer Pulsformungszeitkonstanten von $\tau_s$=4.45/2.225 μs und einer totalen Pulsverarbeitungszeit, d.h. Totzeit von $T_D$=(2.225+7)∗2μs=18.45 μs), so ergibt sich eine Verbreiterung der $^{60}$Co Linie aufgrund des "ballistic deficit" Effektes um 1.27 KeV. Dabei ist anzumerken, daß von "ballistic deficit" Effekten verursachte Auflösungsverschlechterungen linear mit der Energie des des Strahlungsquantes und quadratisch mit der Ladungssammlungszeit ansteigen.

Für die Schaltungsanordnung gemäß Abb. 1 sind dagegen "ballistic deficit" Effekte dieser Art verschwindend, denn der zugrundeliegende Entfaltungsprozeß stellt sicher, daß immer die gesamte Ladung des Strahlungsquantes ohne jegliche Verluste berücksichtigt wird. Der Prozeß ist zudem unabhängig von der Energie des Strahlungsquantes und der Ladungssammlungszeit, zumindest solange gewährleistet ist, daß die Breite des Fensters, in dem die gleitende Entfaltung durchgeführt wird, immer größer als die maximale Ladungssammlungszeit ist.

Allerdings gibt es einen gewissen "ballistic deficit" Effekt aufgrund der endlichen Abtastfrequenz bzw. der endlichen Länge der Abtastintervalle, innerhalb derer Asymmetrien in der Ladungsverteilung auftreten können. Der Ausdruck, der diesen Effekt beschreibt, kann in Analogie zum Quasi-Gauß'schen Fall abgeleitet werden, und lautet dann:

$$FWHM_{BD} = \frac{T_S}{12 \cdot \tau_{RC}} \ast \frac{E_0}{(T_{max}/T_S) + 1} \qquad (8)$$

Dabei sind $T_S$ die Dauer eines Abtastintervalls und $\tau_{RC}$ die Abfallszeitkonstante der Vorverstärkers, während $E_0$ und $T_{max}$ die gleiche Bedeutung haben wie oben. Stezt man in Gl. (8) wieder $E_0$=1.33 MeV, $T_{max}$=800 ns, und nimmt man für $T_S$=40 ns (d.h. 25 MSPS Abtastrate ), $\tau_{RC}$=50 μs und eine Fensterbreite von 100 Abtastintervallen an, was einem Zeitfenster von 4 µs, und damit einem zum $t_0$=4.45 µs des Quasi- Gauß'schen Pulsformers vergleichbaren Wert entspricht, so ergibt sich eine Auflösungsverschlechterung für die $^{60}$Co Eichlinie von lediglich 0.008 keV. Dieses Ergebnis zeigt, daß "ballistic deficit" Effekte um mehr als zwei Größenordnungen unterdrückt werden, und damit praktisch keinerlei Einfluß auf die Leistungsmerkmale der Schaltungsanordnung haben.

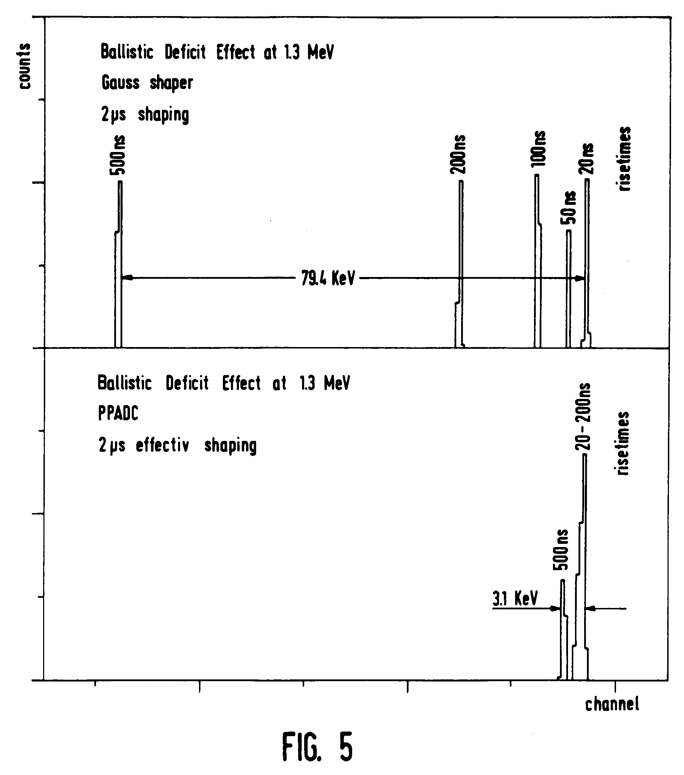

Abb. 5) zeigt die Ergebnisse einer Testmessung mit einem Prototyp der Schaltungsanordnung im Vergleich zu einem konventionellen Spektroskopieverstärker mit Gauß'scher Pulsformung (Silena 7611 L Spectroscopy Amplifier) für Ladungssammlungszeiten von 20, 50, 100, 200 bzw. 500 ns und äquivalente Zeitkonstanten der Pulsformung von 2 µs. Für ein Signal von 1.3 MeV mit einer Ladungssammlungszeit von 500 ns beträgt die Reduktion der Pulsamplitude aufgrund des "ballistic deficit" Effektes beim Gauß'schen Pulsformer 79.4 KeV (oberes Spektrum). Für den Prototyp der Schaltungsanordnung gemäß der Erfindung beläuft sie sich unter gleichen Bedingungen auf lediglich 3.1 KeV (unteres Spektrum). Die verschiedenen Ladungssammlungszeiten des Signals wurden in diesem Test durch Pulsersignale gleicher Amplitude, aber verschiedener Anstiegszeiten simuliert.

Da "charge carrier trapping" und "ballistic deficit" Effekte auf vergleichbare Ursachen zurückzuführen sind, nämlich eine verzögerte Freisetzung von Ladungen, gelten die obigen Betrachtungen auch für die Unterdrückung von "charge carrier trapping" Effekten. Das heißt, was die Unterdrückung von "majority charge carrier trapping" Effekten betrifft, weist die Schaltungsanordnung gemäß Abb. 1 im Vergleich zum Quasi-Gauß'schen und den anderen, z.Zt. gebräuchlichen Pulsformern ähnlich überlegene Eigenschaften auf.

Die Schaltungsanordnung gemäß Abb. 1 zeichnet sich durch ein hervorragendes Rauschunterdrückung-Zählraten Verhältnis bzw. Rauschunterdrüctiung - Totzeit Produkt aus. Aufgrund des steigenden Interesses an Anwendungen von hochauflösenden Ge-Detektoren mit gekühltem FET, in denen es auf die Verarbeitung hoher Zählraten ankommt, und wo man infolgedessen mit Spitzenwertzeiten von weniger als 10 µs, bzw. Gesamttotzeiten für die Pulsverarbeitung von weniger als 30-40 µs arbeiten muß, soll in der folgenden Diskussion nur das in diesen Fällen dominante Delta-Rauschen betrachtet werden. Das Kriterium, anhand dessen die Leistungsfähigkeit der verschiedenen Pulsformungsnetzwerke vergleichen werden soll, ist:

$$NR = \overline{N_D^2} \cdot T_D \qquad (9)$$

Dabei ist $\overline{N_D^2}$ der Rauschindex für das Delta-Rauschen des Pulsformers, und $T_D$ bezeichnet die Gesamttotzeit, die die Verarbeitung eines Ereignisses mit sich bringt. Der Rauschindex - Zählraten Faktor ( "noise-count rate" bzw. NR-Faktor) ist invariant gegenüber den Zeitkonstanten der Pulsformung und daher ein ideales Gütekriterium für die Leistungsmerkmale der verschiedenen Pulsformer.

Die NR-Faktoren für verschiedene Pulsformungsnetzwerke können der Literatur entnommen werden ( F.Goulding and D.Landis, IEEE Trans.Nuc.Sci. 29 (1982) 3; E.Fairstain IEEE Trans.Nuc.Sci. 37 (1990) 2 ). Für den Dreieck-, Quasi-Dreieck-, geschalteten Integrator, sin-N sechster Ordnung, Gauß'schen bzw. siebter Ordnung Quasi-Gauß'schen Pulsformer ergeben sich NR-Faktoren von 6.0, 7.63, 7.35, 8.46, 9.0, bzw. 9.4.

Um den NR-Faktor der Schaltungsanordnung gemäß Abb. 1 zu bestimnen, soll zunächst der Rauschindex des Delta-Rauschens betrachtet werden, der gegeben ist durch:

$$\overline{N_D^2} = \frac{2}{L.T_S} + \frac{2}{N.T_S} \approx \frac{2}{L.T_S} \qquad (10)$$

Hier ist L die Anzahl all derjenigen Entfaltungsfenster, die die Ladungsverteilung des Strahlungsereignissses vollständig überdecken, N die Anzahl der Fenster, die keinerlei Ladungsbeitrag enthalten, und $T_S$ die Dauer eines Abtastintervalls, wobei unterstellt wird, daß $T_S$ der Grenzfrequenz des vor den ADC geschalteten Anti-Aliasing Filters Rechnung trägt, so daß das Abtast-Theorem erfüllt ist. Die Abhängigkeit der Unterdrückung des Delta-Rauschens von L wurde bereits oben diskutiert. Den eigentlichen NR-Faktor nach Gl.(10) erhält man durch Integration der quadrierten ersten Ableitung der Residuum-Funktion des Stufen-Rauschens über das gesamte Verarbeitungsintervall. Der Beitrag des zweiten Terms in Gl.(10) kann durch geeignete Wahl von N im Prinzip beliebig klein gemacht werden. Allerdings erhöht sich damit auch die Trägheit des Systems gegenüber relativ langsamen Schwankungen, wie sie beispielsweise von Temperaturänderungen oder Mikrofonieeffekten etc. hervorgerufen werden. Die optimale Wahl von N, etwa zwei bis drei Größenordnungen größer als M, kann daher nur im konkreten Fall getroffen werden. Für weitere Details sei auf die Literatur verwiesen ( z.B. F. Goulding, Nucl. Instr. Meth. (1972) 100 ).

Die Gesamttotzeit für die Pulsverarbeitung $T_D$ kann leicht anhand der Doppelpulsauflösung der Schaltungsanordnung abgeschätzt werden. Ein Ereignis wird akzeptiert und ein Ergebnis produziert, wenn das betrachtete Ereignis nicht schneller als $L.T_S$ Zeitintervalle auf ein vorheriges folgt und ihm selbst wiederum kein weiteres in einem Abstand kürzer als $M.T_S$ Zeitintervalle folgt, also:

$$T_D = M.T_S + L.T_S = 2.L.T_S + P.T_S = L.\ T_S \cdot (2 + \frac{P}{L}) \tag{11}$$

Hier ist P die maximale Ladungssammlungszeit in Einheiten des Abtastintervalls, welche im konkreten Fall mit Hinblick auf die gewünschte "ballistic deficit" Unterdrückung festzulegen ist. Wählt man jetzt $L.T_S = 4\,\mu s$ und $P.T_S = 800$ ns, was einem P/L verhältnis von 0.2 entspricht, so ergibt Gl. (11) :

$$T_D = 2.2\ .\ L.T_S \tag{12}$$

Setzt man Gl.(10) und Gl.(9) ein, so ergibt sich ein NR-Faktor für die Schaltungsanordnung von NR=4.4.

Ein Vergleich mit den oben angegebenen NR-Faktoren moderner Pulsformungsnetzwerke macht die Verbesserung, die man mit der Schaltungsanordnung gemäß Abb. 1 erzielt, deutlich. Sie beläuft sich, beginnend bei 68% im Vergleich zum geschalteten Integrator, auf bis zu 110%, wie der Vergleich zum Quasi-Gauß'schen Pulsformer zeigt.

Allein der Dreieck-Pulsformer weist vergleichbare Leistungsmerkmale auf, indem die Verbesserung lediglich 36% beträgt. Allerdings ist eine Realisierung des reinen Dreieck-Pulsformers mit analogen Bauelementen praktisch unmöglich, und er wurde nur deshalb in die Betrachtung einbezogen, weil er den asymptotischen Grenzfall für alle Quasi-Dreieck Pulsformer darstellt. Das gleiche gilt für den reinen Gauß'schen Pulsformer, dessen NR-Faktor von 9 dem asymptotischen Grenzwert für alle Quasi-Gauß'schen Pulsformer entspricht, was immerhin eine Verschlechterung von 100% gegenüber der Schaltungsanordnung gemäß Abb.1 bedeutet.

Der verbesserte Rauschindex-Zählraten Faktor der Schaltungsanordnung gemäß Abb. 1 führt in der Praxis dazu, daß im Vergleich zu herkömmlichen, modernen Pulsformern bei unverändertem Rauschverhalten ein 70% bis 90% höherer Durchsatz möglich ist.

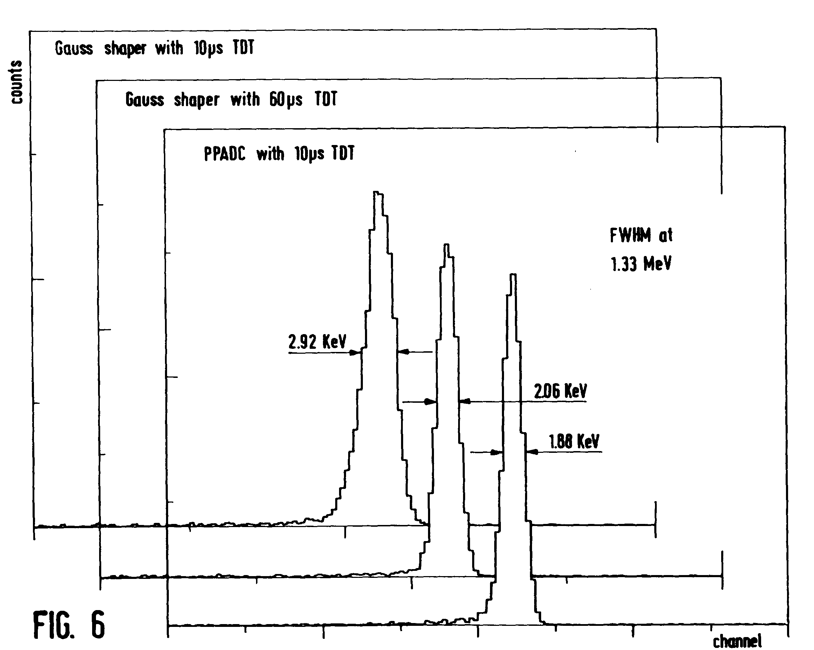

Für eine auf hohen Durchsatz hin optimierte Einstellung der Pulsformungszeitkonstanten (1 μs) mit einer resultierenden Gesamttotzeit der Signalverarbeitung (Total Dead Time TDT) von 10 μs ist in Abb. 6 die mit einem großvolumigen n-Typ Germaniumdetektor und einem Quasi-Gauß'schen Pulsformer (Silena 7611 L Spectroscopy Amplifier) experimentell gemessene Energieauflösung für die 1.332 MeV $\gamma$-Linie des $^{60}$Co dargestellt. Die Halbwertsbreite beträgt 2.92 KeV (oberes Spektrum). Mit dem Prototyp der Schaltungsanordnung gemäß Abb. 1 ergibt sich unter gleichen Bedingungen eine Halbwertsbreite von 1.88 KeV (unteres Spektrum). Dieser Wert übertrifft sogar die bei einer Pulsformungszeitkonstanten von 6 μs mit dem Quasi-Gauß'schen Pulsformer maximal erreichbare Auflösung von 2.06 KeV (mittleres Spektrum). Die Schaltungsanordnung gemäß Abb. 1 reproduziert eine solche Auflösung mit einer Einstellung der Pulsformungsparameter, die einen ca. 9 mal höhleren Durchsatz ermöglicht.

Hinzu kommt, daß die Schaltungsanordnung gemäß Abb. 1 direkt den digitalen Wert liefert, während alle anderen, hier diskutierten Pulsformer zusätzlich einen ADC zur Digitalisierung der Amplitude ihrer Ausganssignale benötigen. Dies führt zu einem Anstieg der Totzeit $T_D$ und damit des NR-Faktors. Da eine allgemeine Diskussion der Leistungsmerkmale kombinierter Systeme, Pulsformer - ADC, schwierig ist soll an dieser Stelle nur ein numerisches Beispiel angeführt werden. Betrachtet man ein kombiniertes System aus einem geschaltetem Integroter (z.B. ORTEC 672) mit einer effektiven Pulsformungszeitkonstanten von $\tau_s = 2.5\,\mu s$ (was einer Pulsverarbeitungszeit von 2. $\tau_S = 5\,\mu s$ und damit einer Totzeit von 10 μs entspricht) und einem nach dem binaren Wägeverfahrenarbeitenden ADC (z.B. Silena 7428 UHS) mit 3.0 μs Konversionszeit und 0.5 μs "rise-time protection" Überlapp, so ergibt sich eine Gesamttotzeit des Systems von 10 μs + 0.5 μs + 3.5 μs = 14 μs.

Vergleicht man diesen Wert mit der Totzeit der Schaltungsanordnung gemäß Abb.1, die sich bei einer äquivalenten Pulsformung von $L.T_S = 3\,\mu s$ und bei einer maximalen Ladungssammlungszeit von $P.T_S = 0.8\,\mu s$ zu 2. 3 μs + 0.8 μs = 6.8 μs ergibt, so erkennt man, daß der bei der herkömmlichen Signalverarbeitung zur Digitalisieru ng zusätzlich erforderliche ADC, den Leistungsunterschied zwischen geschaltetem Integrator und der Schaltungsanordnung gemäß Abb. 1 von 68% auf 120% anwachsen läßt. Mit anderen Worten, die hier vorgestellte Schaltungsanordnung erlaubt bei gleicher Rauschunterdrückung einen um 120% höheren Durchsatz als die zumindest im Hinblick auf das Rauschunterdrückung-Zählraten Verhalten "state-of-the-art" Kombination aus geschaltetem Integrator und "successive approximation" ADC.

**Patentansprüche**

1. Schaltungsanordnung für die digitale Verarbeitung von Halbleiterdetektorsignalen, die zur Bestimmung der im Detektor von einem Strahlungsereignis erzeugten Gesamtladung vorgesehen ist, wobei dem Detektor ein ladungsempfindlicher Vorverstärker nachgeschaltet ist, dessen Ausgang mit dem Eingang (E) der Schaltungsanordnung verbunden ist, und die einen schnellen Analog zu Digital Konverter (ADC)-(A1) zur Abtastung und Digitalisierung des Vorverstärkersignals, sowie eine Zeitdiskriminator- und Kontrolleinheit (A2) zum Nachweis des Eintreffens eines zu verarbeitenden Signals und zur Bereitstellung aller notwendigen Steuersignale enthält,

**dadurch gekennzeichnet**, daß die Schaltungsanordnung derart ausgebildet ist, daß sie das Endresultat, nämlich die im Halbleiterdetektor durch ein einzelnes Strahlungsquant freigesetzte Gesamtladungsmenge, berechnet, in dem sie die Differenz bildet zwischen dem Wert, der die Gesamtladung des Strahlungsquantes repräsentiert und der sich aus den L Ergebnissen einer numerischen Entfaltung der im Eingangssignal mit der in der Regel wohldefinierten Vorverstärker-Übertragungsfunktion gefalteten Ladungsverteilungsfunktion des Strahlungsereignisses über eine Anzahl L solcher Zeitfenster auf dem Eingangssignal ergibt, die die Ladungsverteilung des Strahlungsereignisses jeweils vollständig überdecken, und dem Wert, der den momentanen Ladungsbeitrag des Stufen-Rauschens zur gemessenen Ladung angibt, und der sich aus den N Ergebnissen einer numerischen Entfaltung der im Eingangssignal mit der in der Regel wohldefinierten Vorverstärker-Übertragungsfunktion gefalteten Ladungsverteilungsfunktion des Stufenrauschens über eine Anzahl N solcher Zeitfenster auf dem Eingangssignal ergibt, die keine irgendeinem Strahlungsereignis zuzuschreibende Ladung enthalten,

wobei in der Schaltungsanordnung die folgenden Module vorhanden sind:

a) ein MWD Modul A3, dessen Eingang mit dem Ausgang des ADC's verbunden ist, zur gleitenden numerischen Entfaltung der im digitalisierten Eingangssignal (E) mit der in der Regel wohldefinierten Vorverstärker-Übertragungsfunktion gefaltet vorliegenden diskreten Ladungsverteilungsfunktion des Strahlungsereignisses bzw. des Stufenrauschens über ein Zeitfenster einer Breite von M Abtastintervallen und gleichzeitig zur Erzeugung einer kontinuierlichen Serie von im Abstand eines Abtastintervalls aufeinanderfolgenden Ergebnissen der Entfaltung dadurch, daß das Zeitfenster über die Abtastwerte des Eingangssignals gleitet, so daß jedes neue Ergebnis aus einer Verschiebung des Zeitfensters um ein Abtastintervall gegenüber dem Vorhergehenden resultiert,

b) ein weiteres Modul A4, dessen Eingang mit dem Ausgang des MWD Moduls A3 verbunden ist, zur Bestimmung des die Gesamtladung des Strahlungsquantes repräsentierenden Wertes anhand der L Ergebnisse aus der Serie der vom MWD Modul A3 produzierten Entfaltungsresultate, die die Gesamtladung des Ereignisses jeweils vollständig enthalten,

c) ein weiteres Modul A5, dessen Eingang mit dem Ausgang des MWD Moduls A3 verbunden ist, zur Ermittlung des Beitrages des momentanen Stufen-Rauschens anhand der N Ergebnisse aus der Serie der vom MWD Modul A3 produzierten Entfaltungsresultate, die jeweils keine irgendeinem Strahlungsereignis zuzuschreibende Ladung enthalten, und

d) ein weiteres Modul A6, welches mit den vorgenannten Modulen in Beziehung steht, zur Berechnung des Endresultates durch Subtraktion des momentanen Beitrages des Stufen-Rauschens von dem die Gesamtladung des Ereignisses repräsentierenden Wert,

wobei
die Zahl M, d.h. die Breite des Fensters in Einheiten des Abtastintervalls, über welches die numerische Entfaltung der im digitalisierten Eingangssignal (E) mit der in der Regel wohldefinierten Vorverstärker-Übertragungsfunktion gefaltet vorliegenden diskreten Ladungsverteilungsfunktion des Strahlungsereignisses bzw. des Stufenrauschens durchgeführt wird, um L Abtastintervalle größer als das maximale Zeitintervall, in dem ein Freisetzen von Ladung stattfinden kann, also um L Abtastintervalle größer als die maximale Ladungssammlungszeit ist, und die Zahl N gleich oder größer als L ist.

2. Schaltungsanordnung gemäß Anspruch 1, wobei das MWD Modul A3 derart ausgebildet ist, daß es geeignet ist zur numerischen Berechnung einer kontinuierlichen Serie von Ergebnissen einer Entfaltung der im digitalisierten Eingangssignals (E) mit der in der Regel wohldefinierten Vorverstärker-Übertragungsfunktion gefaltet vorliegenden diskreten Ladungsverteilungsfunktion des Strahlungsereignisses bzw. des Stufenrauschens über ein Zeitfenster von M Abtastintervallen, wobei jedes neue Ergebnis aus einer Verschiebung des Zeitfensters um ein Abtastintervall gegenüber dem Vorhergehenden resultiert, und wobei das MWD Modul A3 mit Hilfe gebräuchlicher Bauelemente oder entsprechender DSP Prozeßelemente in Form einer M-stufigen digitalen Verzögerungseinheit, eines Subtrahierers, eines Summierers, einer einstufigen digitalen Verzögerungseinheit sowie eines Multiplizierers mit dem konstanten Multiplikator K derart realisiert ist, daß

- der Eingang des MWD Moduls A3 sowohl mit dem positiven Eingang eines Subtrahierers (B2) als auch über eine M-stufige digitale Verzögerungseinheit (B1) mit dem negativen Eingang des Subtrahierers verbunden ist, wobei M die Breite des Fensters, über welches die numerische Entfaltung durchgeführt wird, bezeichnet und

- der Ausgang des Subtrahierers über eine einstufige Verzögerungseinheit (B3) einem der Eingänge eines Summierers (B4) zugeführt wird, dessen Ausgang wiederum sowohl über eine zweite einstufige Verzögerungseinheit (B5) auf den anderen Eingang des Summierers (B4) rückgekoppelt als auch über einen Multiplizierer mit dem konstanten Multiplikator K (B6) mit einem der Eingänge eines Ausgangssummierers (B7) verbunden ist, dessen zweiter Eingang mit dem Ausgang des Subtrahierers verschaltet ist, wobei die Konstante K durch die Abfallszeitkonstante des Vorverstärkers und die Abtastrate des ADC's vorgegeben ist.

3. Schaltungsanordnung gemäß Anspruch 1, wobei das weitere Modul A4 als Modul zur Mittelwertbildung ausgebildet ist, welches zur Bestimmung des die Gesamtladung des Strahlungsquantes repräsentierenden Wertes eine Mittelung über eine vorgegebene Anzahl aufeinanderfolgender Daten, die einem kontinuierlichen Datenstrom entnommen werden, durchführt.

4. Schaltungsanordnung gemäß Anspruch 3, wobei das weitere Modul A4 mit Hilfe gebräuchlicher Bauelemente oder DSP Prozeßelemente in Form eines Akkumulators, eines Registers und eines Multiplizierers mit der Konstanten 1/L derart realisiert ist, daß

- der Dateneingang (In) und der Takteingang (C) des Moduls jeweils mit dem Daten- bzw. Takteingang eines Akkumulators (D1), und dessen Rücksetzeingang mit dem Zeitschalt-Kontrolleingang (T) des Moduls verbunden sind, und

- der Ausgang des Akkumulators über einen Multiplizierer mit dem konstanten Multiplikator 1/L (D2) in den Dateneingang eines Registers (D3) eingespeist wird, dessen Takteingang wiederum mit dem Zeitschalt-Kontrolleingang des Moduls verbunden ist,

wobei L die Anzahl der Werte ist, über die gemittelt wird.

5. Schaltungsanordnung gemäß Anspruch 1, wobei das weitere Modul A5 als Modul zur gleitenden Mittelwertbildung ausgebildet ist, welches eine gleitende Mittelung über eine feste Anzahl aufeinanderfolgender Daten, die einem kontinuierlichen Datenstrom entnommen werden, durchgeführt, indem man den Bereich, dem die Daten entnommen werden, über den Datenstrom gleiten läßt, und einen mit jedem neuen Dateneintrag aktualisierten, momentanen Mittelwert als Ergebnis berechnet.

6. Schaltungsanordnung gemäß Anspruch 5, wobei das weitere Modul A5 mit Hilfe gebräuchlicher Bauelemente oder DSP-Prozeßelemente in Form eines N-stufigen FIFO Speichers, eines Subtrahierers, eines Akkumulators und eines Multiplizierers mit dem konstanten Multiplikator 1/N derart realisiert ist, daß

- der Eingang des Moduls sowohl mit dem positiven Eingang eines Subtrahierers (C2) als auch über einen FIFO-Speicher (C1) mit dessem negativen Eingang verbunden ist,

- der Ausgang des Subtrahierers über einen Multiplizierer mit dem konstanten Multiplikator 1/N (C3) dem Eingang eines Akkumulators (C4) zugeführt wird, dessen Ausgang wiederum gleichzeitig den Ausgang des Moduls darstellt, und

- die für den FIFO Speicher und den Akkumulator identische Taktfrequenz über den Takteingang (C) des Moduls eingespeist wird,

wobei N die Anzahl der Daten ist, über die der jeweilige, momentane Mittelwert gebildet wird.

7. Schaltungsanordnung gemäß Anspruch 1, wobei das weitere Model A6 einen Subtrahierer zur Berechnung des Endergebnisses durch Subtraktion des momentanen Beitrages des Stufen-Rauschens von dem die Gesamtladung des Strahlungsquantes representierenden Wert umfaßt.

8. Schaltungsanordnung gemäß Anspruch 1, bei der zur Vermeidung von Aliasing-Effekten ein Tiefpaß-Filter (A8) zwischen Vorverstärker und ADC geschaltet ist.

**Claims**

1. Circuit arrangement for the digital processing of semiconductor detector signals, which circuit arrangement is provided for determining the total charge generated in the detector by a radiation event, a charge-sensitive preamplifier, whose output is connected to the input (E) of the circuit arrangement, being connected downstream of the detector, and which circuit arrangement contains a fast analog-to-digital converter (ADC)-(A1) for sampling and digitizing the preamplifier signal, as well as a time discriminator and a supervisory unit (A2) for detecting the arrival of a signal to be processed and for providing all the necessary control signals, characterized in that the circuit arrangement is designed in such a way that it calculates the end result, namely the total amount of charge released in the semiconductor detector by a single radiation quantum, by forming the difference between the value which represents the total charge of the radiation quantum and is produced from the L results of a numerical deconvolution of the charge distribution function, which is convoluted in the input signal with the generally well-defined preamplifier transfer function, of the radiation event over a number L of those time windows on the input signal which in each case completely cover the charge distribution of the radiation event, and the value which specifies the instantaneous charge contribution of the step noise to the measured charge and is produced from the N results of a numerical deconvolution of the charge distribution function, which is convoluted in the input signal with the generally well-defined preamplifier transfer function, of the step noise over a number N of those time windows on the input signal which contain no charge to be ascribed to any radiation event, the following modules being present in the circuit arrangement:

   a) an MWD module A3, whose input is connected to the output of the ADC, for moving window numerical deconvolution of the discrete charge distribution function, which is present in convoluted form in the digitized input signal (E) with the generally well-defined preamplifier transfer function, of the radiation event or of the step noise over a time window having a width of M sampling intervals, and, at the same time, for generating a continuous series of deconvolution results, succeeding one another at the interval of a sampling interval, by the time window moving across the samples of the input signal, so that each new result results from a displacement of the time window by one sampling interval relative to the preceding one,
   b) a further module A4, whose input is connected to the output of the MWD module A3, for determining the value which represents the total charge of the radiation quantum using the L results from the series of deconvolution results produced by the MWD module A3, which in each case completely contain the total charge of the event,
   c) a further module A5, whose input is connected to the output of the MWD module A3, for determining the contribution of the instantaneous step noise using the N results from the series of deconvolution results produced by the MWD module A3, which in each case contain no charge to be ascribed to any radiation event, and
   d) a further module A6, which is related to the aforementioned modules, for calculating the end result by subtracting the instantaneous contribution of the step noise from the value which represents the total charge of the event,

   the number M, that is to say the width of the window in units of the sampling interval, over which the numerical deconvolution of the discrete charge distribution function, which is present in convoluted form in the digitized input signal (E) with the generally well-defined preamplifier transfer function, of the radiation event or of the step noise is carried out, being greater by L sampling intervals than the maximum time interval in which charge can be released, in other words being greater by L sampling intervals and the maximum charge accumulation time, and the number N being greater than or equal to L.

2. Circuit arrangement according to Claim 1, the MWD module A3 being designed in such a way that it is suitable for the numerical calculation of a continuous series of results of a deconvolution of the discrete charge distribution function, which is present in convoluted form in the digitized input signal (E) with the generally well-defined preamplifier transfer function, of the radiation event or of the step noise over a time window of M sampling intervals, each new result resulting from a displacement of the time window by one sampling interval relative to the preceding one, and the MWD module A3 being realized with the aid of conventional components or corresponding DSP process elements in the form of an M-stage digital delay unit, a subtractor, a summer, a single-stage digital delay unit as well as a multiplier having the constant multiplication factor K, in such a way that

   - the input of the MWD module A3 is connected both to the positive input of a subtractor (B2) and, via an M-stage digital delay unit (B1), to the negative input of the subtractor, M denoting the width of the window over which the numerical deconvolution is carried out, and
   - the output of the subtractor is fed via a single-stage delay unit (B3) to one of the inputs of a summer (B4), whose output is in turn both fed back to the other input of the summer (B4) via a second single-stage delay unit (B5) and is connected via a multiplier having the constant multiplication factor K (B6) to one of the inputs of an output summer (B7), whose second input is connected up to the output of the subtractor, the constant K being prescribed by the fall time constant of the preamplifier and the sampling rate of the ADC.

3. Circuit arrangement according to Claim 1, the further module A4 being designed as a module for averaging, which carries out averaging over a predetermined number of succeeding data, which are taken from a continuous data stream, for the purpose of determining the value which represents the total charge of the radiation quantum.

4. Circuit arrangement according to Claim 3, the further module A4 being realized with the aid of conventional components or DSP process elements in the form of an accumulator, a register and a multiplier having the constant 1/L, in such a way that

   - the data input (In) and the clock input (C) of the module being respectively connected to the data and clock inputs of an accumulator (D1), and the reset input of the latter being connected to the timing/control input (T) of the module, and
   - the output of the accumulator is fed via a multiplier having the constant multiplication factor 1/L (D2) into the data input of a register (D3), whose clock input is in turn connected to the timing/control input of the module,

   L being the number of values over which averaging is carried out.

5. Circuit arrangement according to Claim 1, the further module A5 being designed as a module for moving averaging, which carries out moving averaging over a fixed number of succeeding data, which are taken from a continuous data stream, by allowing the region from which the data are taken to move across the data stream and by calculating an instantaneous average, which is updated with every new data entry, as the result.

6. Circuit arrangement according to Claim 5, the further module A5 being realized with the aid of conventional components or DSP process elements in the form of an N-stage FIFO memory, a subtractor, an accumulator and a multiplier having the constant multiplication factor 1/N, in such a way that

   - the input of the module is connected both to the positive input of a subtractor (C2) and, via a FIFO memory (C1) to the negative input of the said subtractor,
   - the output of the subtractor is fed via a multiplier having the constant multiplication factor 1/N (C3) to the input of an accumulator (C4), whose output in turn simultaneously represents the output of the module, and
   - the clock frequency, which is identical for the FIFO memory and the accumulator, is fed in via the clock input (C) of the module,

   N being the number of data over which the respective instantaneous average is formed.

7. Circuit arrangement according to Claim 1, the further module A6 comprising a subtractor for calculating the end result by subtracting the instantaneous contribution of the step noise from the value which represents the total charge of the radiation quantum.

8. Circuit arrangement according to Claim 1, in which a low-pass filter (A8) is connected between the preamplifier and ADC for the purpose of avoiding aliasing effects.

**Revendications**

1. Montage pour le traitement numérique de signaux d'un détecteur à semiconducteurs, qui est destiné à déterminer la charge complète produite dans le détecteur par un phénomène de rayonnement, et dans lequel en aval du détecteur est branché un préamplificateur sensible à la charge, dont la sortie est reliée à l'entrée (E) du montage, montage qui comporte un convertisseur analogique/numérique rapide (ADC)-(A1) servant à échantillonner et numériser le signal du préamplificateur, ainsi qu'une unité de discrimination de temps et de contrôle (A2) pour détecter l'arrivée d'un signal à traiter et préparer tous les signaux de commande nécessaires, caractérisé en ce que le montage est agencé de telle sorte qu'il calcule le résultat final, à savoir la quantité totale de charge libérée dans le détecteur à semiconducteurs par un quantum de rayonnement isolé, par le fait qu'il forme la différence entre la valeur, qui représente la charge totale du quantum de rayonnement et est obtenue à partir des L résultats d'une déconvolution numérique de la fonction de distribution de charge du phénomène de rayonnement, mise en convolution dans le signal d'entrée avec la fonction de transfert normalement bien définie du préamplificateur, avec le signal d'entrée sur un nombre L de fenêtres temporelles, qui recouvrent respectivement complètement la distribution de charge du phénomène de rayonnement, et la valeur qui indique la contribution de charge instantanée du bruit d'étagement à la charge mesurée et qui résulte des N résultats d'une déconvolution numérique de la fonction de distribution de charge du bruit d'étagement, mise en convolution dans le signal d'entrée avec la fonction de transfert normalement bien définie du préamplificateur, avec le signal d'entrée sur un nombre N de fenêtres temporelles, qui ne contiennent aucune charge pouvant être imputée à un quelconque phénomène de rayonnement,

le montage contenant les modules suivants :

a) un module MWD A3, dont l'entrée est reliée à la sortie du convertisseur analogique/numérique, pour réaliser la déconvolution numérique glissante de la fonction de distribution de charge discrète du phénomène de rayonnement ou du bruit d'étagement, mise en convolution dans le signal d'entrée numérisé (E) avec la fonction de transfert normalement bien définie du préamplificateur, sur une fenêtre temporelle d'une largeur égale à M intervalles d'échantillonnage et simultanément pour la production d'une série continue de résultats de la convolution, qui se succèdent en étant séparés par l'intervalle d'échantillonnage, par le fait que la fenêtre temporelle glisse sur les valeurs d'échantillonnage du résultat d'entrée de sorte que chaque nouveau résultat est obtenu à partir d'un décalage de la fenêtre temporelle sur un intervalle d'échantillonnage par rapport au résultat précédent,

b) un autre module A4, dont l'entrée est reliée à la sortie du module MWD A3, pour la détermination de la valeur qui représente la charge totale du quantum de rayonnement, sur la base des L résultats tirés de la série des résultats de déconvolution produits par le module MWD A3 et qui contiennent chacun entièrement la charge complète du phénomène,

c) un autre module A5, dont l'entrée est reliée à la sortie du module MWD A3, pour la détermination de la contribution du bruit instantané d'étagement, sur la base des N résultats tirés de la série des résultats de déconvolution produits par le module MWD A3 et dont aucun ne contient aucune charge imputable à un quelconque phénomène de rayonnement, et

d) un autre module A6, qui en relation avec les modules indiqués précédemment, pour le calcul du résultat final par soustraction de la contribution instantanée du bruit d'étagement, de la valeur représentant la charge totale du phénomène,

le nombre M, c'est-à-dire la largeur de la fenêtre en unités de l'intervalle d'échantillonnage, dans laquelle est exécutée la déconvolution numérique de la fonction de distribution de charge discrète du phénomène de rayonnement ou du bruit d'étagement, qui est présente à l'état convolu avec la fonction de transfert normalement bien définie du préamplificateur, est supérieur, de L intervalles d'échantillonnage, à l'intervalle de temps maximum, pendant lequel peut se produire une libération de charge, c'est-à-dire est supérieur de L intervalles d'échantillonnage à la durée maximale de collecte de la charge, et le nombre N est égal ou supérieur à L.

**2.** Montage selon la revendication 1, dans lequel le module MWD A3 est agencé de telle sorte qu'il convient pour le calcul numérique d'une série continue de résultats d'une déconvolution de la fonction discrète de distribution de charge du phénomène de rayonnement ou du bruit d'étagement, qui est présente à l'état convolu dans le signal d'entrée numérisé (E) avec la fonction de transfert normalement bien définie du préamplificateur, sur une fenêtre temporelle de M intervalles d'échantillonnage, chaque nouveau résultat résultant d'un décalage de la fenêtre temporelle d'un intervalle d'échantillonnage par rapport au résultat précédent, et le module MWD A3 étant réalisé à l'aide de composants usuels ou d'éléments de traitement DSP correspondants sous la forme d'une unité de retardement numérique à M étages, d'un soustracteur, d'un additionneur, d'une unité de retardement numérique à un seul étage ainsi que d'un multiplicateur possédant le facteur multiplicatif constant K, de telle sorte que,

- l'entrée du module MWD A3 est reliée aussi bien à l'entrée positive d'un soustracteur (B2) que, également, par l'intermédiaire d'une unité de retardement numérique à M étages (B1), à l'entrée négative du soustracteur, M étant la largeur de la fenêtre, dans laquelle est exécutée la déconvolution numérique, et
- la sortie du soustracteur est reliée par l'intermédiaire d'une unité de retardement à un étage (B3) à l'une des entrées d'un additionneur (B4), dont la sortie est à nouveau reliée d'une part étant couplée par l'intermédiaire d'une seconde unité de retardement à un étage (B5) à l'autre entrée de l'additionneur (B4) et est reliée par l'intermédiaire d'un multiplicateur possédant un facteur multiplicatif K constant (B6) à l'une des entrées d'un additionneur de sortie (B7), dont l'autre entrée est connectée à la sortie du soustracteur, la constante K étant prédéterminée par la constante de temps de retombée du préamplificateur et par la cadence d'échantillonnage du convertisseur analogique/numérique.

3. Montage selon la revendication 1, dans lequel l'autre module A4 est agencé sous la forme d'un module servant à former la valeur moyenne et qui, pour déterminer la valeur représentant la charge totale du quantum de rayonnement, exécute une formation de la moyenne sur un nombre prédéterminé de données successives, qui sont prélevées d'un flux de données continu.

4. Montage selon la revendication 3, dans lequel l'autre module A4 est réalisé à l'aide de composants usuels ou d'éléments de traitement DSP, sous la forme d'un accumulateur, d'un registre et d'un multiplicateur possédant la constante 1/L, de telle sorte que

   - l'entrée de données (In) et l'entrée de cadence (C) du module sont reliées respectivement à l'entrée de données et à l'entrée de cadence d'un accumulateur (D1) et dont l'entrée de remise à l'état initial est reliée à l'entrée de contrôle de temporisation (T) du module,
   - la sortie de l'accumulateur est reliée, par l'intermédiaire d'un multiplicateur présentant le facteur multiplicatif constant 1/L (D2), à l'entrée de données d'un registre (D3), dont l'entrée de cadence est reliée à nouveau à l'entrée de contrôle de temporisation du module, L étant le nombre des valeurs, sur lesquelles la moyenne est formée.

5. Montage selon la revendication 1, dans lequel l'autre module A5 est agencé sous la forme d'un module utilisé pour la formation glissante de la valeur moyenne, qui exécute la formation d'une moyenne glissante sur un nombre fixe de données successives, qui sont prélevées d'un flux de données continu, par le fait que l'on peut faire glisser la zone, à partir de laquelle les données sont prélevées, dans le flux de données, et que l'on calcule, comme résultat, une valeur moyenne instantanée, actualisée avec chaque nouvelle entrée de données.

6. Montage selon la revendication 6, dans lequel l'autre module A5 est constitué à l'aide de composants usuels ou d'éléments de traitement DSP usuels, sous la forme d'une mémoire FIFO à N étages, d'un soustracteur, d'un accumulateur et d'un multiplicateur possédant un facteur multiplicatif constant 1/N, de telle sorte que

   - l'entrée du module est reliée aussi bien à l'entrée positive d'un soustracteur (C2) qu'à une entrée négative de ce soustracteur par l'intermédiaire d'une mémoire FIFO (C1),
   - la sortie du soustracteur et reliée par l'intermédiaire d'un multiplicateur présentant un facteur multiplicatif constant 1/N (C3), à l'entrée d'un accumulateur (C4), dont la sortie représente à nouveau simultanément la sortie du module, et
   - la même fréquence de cadence pour la mémoire FIFO et l'accumulateur est introduite par l'intermédiaire de l'entrée de cadence (C) du module,

   N étant le nombre des données, sur lesquelles la valeur moyenne instantanée respective est formée.

7. Montage selon la revendication 1, dans lequel l'autre module A6 comprend un soustracteur servant à calculer le résultat final par soustraction de la contribution instantanée du bruit d'étagement, de la valeur représentant la charge totale du quantum de rayonnement.

8. Montage selon la revendication 1, dans lequel, pour éviter des effets de formation d'images fantômes, un filtre passe-bas (A8) est branché entre le préamplificateur et le convertisseur analogique/numérique.

FIG. 1

FIG. 2

FIG. 3

FIG. 4

FIG. 5

FIG. 6